# EUROPÄISCHE PATENTSCHRIFT

(11) **EP 0 713 504 B1**
(45) Veröffentlichungstag und Bekanntmachung des Hinweises auf die Patenterteilung: **07.10.1998**
(21) Anmeldenummer: 94925404.9
(22) Anmeldetag: 28.07.1994
(51) Int. Cl.: C08G 65/32, C08F 290/06, C08F 8/14, B01D 17/04

(54) **REAKTIONSPRODUKTE AUS OLEFINISCH UNGESÄTTIGTEN CARBONSÄUREN UND POLYETHEROLEN SOWIE IHRE VERWENDUNG ALS DEMULGATOREN FÜR ROHÖLEMULSIONEN**
REACTION PRODUCTS FROM OLEFINICALLY UNSATURATED CARBOXYLIC ACIDS AND POLYETHEROLS AND THEIR USE AS DEMULSIFYING AGENTS FOR CRUDE OIL EMULSIONS
PRODUITS DE REACTION D'ACIDES CARBOXYLIQUES NON SATURES PAR LES OLEFINES ET DE POLYETHEROLS ET UTILISATION COMME DESEMULSIFIANTS POUR LES EMULSIONS DE PETROLE BRUT

(30) Priorität: 10.08.1993 DE 4326772
(43) Veröffentlichungstag der Anmeldung: 29.05.1996
(73) Patentinhaber: BASF AKTIENGESELLSCHAFT, 67056 Ludwigshafen (DE)
(72) Erfinder: FAUL, Dieter, D-67098 Bad Dürkheim (DE); ROSER, Joachim, D-68165 Mannheim (DE); HARTMANN, Heinrich, D-67117 Limburgerhof (DE); VOGEL, Hans-Henning, D-67227 Frankenthal (DE); SLOTMAN, Wilhelmus, D-67063 Ludwigshafen (DE); KONRAD, Gerd, D-67117 Limburgerhof (DE)
(86) Internationale Anmeldenummer: EP9402487
(87) Internationale Veröffentlichungsnummer: WO9504771

(56) Entgegenhaltungen:
- EP-A- 0 264 841
- EP-A- 0 499 068
- FR-A- 1 566 863
- US-A- 5 156 767

## Beschreibung

Die vorliegende Erfindung betrifft Reaktionsprodukte mit einer Hydroxylzahl von 2 bis 20 aus olefinisch ungesättigten Carbonsäuren und Polyetherolen, erhältlich durch
A) Kondensation einer oder mehrerer ungesättigter C₃-C₁₀-Carbonsäuren oder deren Derivate der allgemeinen Formel I 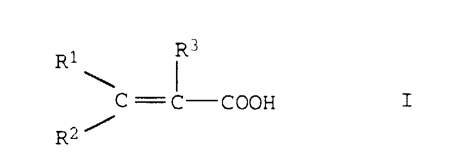 in der R¹ und R² für Wasserstoff, C₁-C₄-Alkyl oder Carboxyl und R³ für Wasserstoff oder Methyl stehen, und R¹ mit der Carboxylgruppe einen 5- oder 6-gliedrigen Anhydridring bilden kann,
   mit einem Polyetherol II, welches erhältlich ist durch Umsetzung eines mehrwertigen Alkohols oder eines Alkylphenol/ Formaldehyd- oder Alkylphenol/Acetaldehyd-Kondensationsproduktes mit 5 bis 120 mol eines oder mehrerer verzweigter oder geradkettiger C₂- bis C₄-Alkylenoxide pro Mol des mehrwertigen Alkoholes oder des Alkylphenol/Formaldehyd- oder -Acetaldehyd-Kondensationsproduktes, wobei mehrere Alkylenoxide in einer Mischung oder blockweise angelagert werden können,
   im molaren Verhältnis der Verbindungen II zu I von 2:1 bis 10:1 und im Gewichtsverhältnis von 25:1 bis 1000:1 bei Temperaturen von 60 bis 100°C für 0,5 bis 1 Stunde,
B) Polymerisation des so erhaltenen Reaktionsgemisches, das das Kondensationsprodukt sowie nicht umgesetztes Polyetherol II enthält, gegebenenfalls mit weiteren olefinisch ungesättigten, mit den Carbonsäuren I copolymerisierbaren Monomeren, wobei der Anteil der Carbonsäuren I an der Menge der olefinisch ungesättigten Monomeren 50 bis 100 mol-% beträgt, und wobei das molare Verhältnis des Polyetherols II zur Summe der in den Verfahrensschritten A) und B) eingesetzten olefinisch ungesättigten Monomeren 1:5 bis 1:200 beträgt, sowie anschließende
C) Kondensation des so erhaltenen Reaktionsgemisches mit der Maßgabe, daß nicht alle Hydroxylgruppen umgesetzt werden.

Außerdem betrifft die Erfindung die Herstellung dieser Reaktionsprodukte sowie Mischungen, die die Reaktionsprodukte enthalten. Schließlich betrifft die Erfindung die Verwendung der Reaktionsprodukte als Demulgatoren für Rohölemulsionen.

Bei der Förderung von Rohölen wird mit zunehmender Ausbeutung der Lagerstätten ein steigender Anteil an Wasser mit gefördert. In den Rohölen enthaltene, oberflächenaktive Substanzen emulgieren den größten Teil des Wassers, wobei sich stabile Wasser-in-Öl-Emulsionen bilden. Im Emulsionswasser können Salze gelöst sein, die bei der Weiterverarbeitung des Rohöls in der Raffinerie zu Korrosionsproblemen führen. Auch führen hohe Wasseranteile im Rohöl zu erhöhten Transportkosten zwischen Ölfeld und Raffinerie. Das Emulsionswasser muß deshalb vor dem Transport abgetrennt bzw. unter eine akzeptable Konzentration gesenkt werden. Dies erfolgt meist durch den Zusatz von Erdölemulsionsspaltern (auch Demulgatoren genannt), wobei eine Erwärmung des Rohöls die Auftrennung erleichtert und beschleunigt.

Rohöle unterscheiden sich in Abhängigkeit von ihrer Provinienz stark in ihrer Zusammensetzung. Die in den Rohölen enthaltenen natürlichen Emulgatoren besitzen unterschiedliche relativ kompliziert aufgebaute chemische Strukturen und Zusammensetzungen, so daß zur Überwindung ihrer Wirkung selektiv Erdölemulsionsspalter (Demulgatoren) entwickelt werden müssen. Durch die Erschließung neuer Rohöl felder sowie durch geänderte Förderbedingungen bei älteren Feldern werden ständig neue Demulgatoren benötigt, die eine schnellere Auftrennung in Wasser und Öl sowie möglichst niedrige Restwasser- und damit verbunden Restsalzmengen bewirken.

Als Demulgatoren bekannt sind sog. "polymere Erdölemulsionsspalter", darunter werden Polymere mit einer Kohlenstoff-Hauptkette verstanden. Gemäß der Patentschrift CA 10 10 740 werden in alkoxilierte Alkohole und alkoxilierte Alkylphenolformaldehydharze durch Veretherung mit ungesättigten Diglycidylverbindungen (z.B. Glycidylacrylat), durch Veresterung mit Maleinsäureanhydrid oder ungesättigten Säuren oder durch Umesterung mit Estern ungesättigter Säuren ungesättigte, radikalisch polymerisierbare Funktionen eingeführt, welche in einer anschließenden Reaktion mit anderen Monomeren in definierten Mengenverhältnissen in Lösung polymerisiert werden.

In DE-C 33 38 923 werden Produkte beschrieben, welche aus einer Copolymerisation von Polyoxyalkylenethern des Allyl- bzw. Methallylalkohols mit Vinylestern oder Acrylsäure- bzw. Methacrylsäureestern erhalten werden. Alle diese Produkte zeigen wirkungsspezifische oder herstellungsbedingte Schwächen. So kommt es bei Verwendung von Glycidylverbindungen zur Einführung der ungesättigten Funktionen bei der Polymerisation häufig zur Bildung von Gelkörpern und Inhomogenitäten, bei Derivaten des Allylalkohols, Methallylalkohols und Maleinsäure ergeben sich schlechte Copolymerisationsbedingungen. Des weiteren kommt es häufig zu Vergelungs- und Verfestigungsreaktionen, insbesondere durch Verwendung von multifunktionellen Ausgangsalkoholen bei der Alkoxilierung.

In der US-A 4 626 379 werden Demulgatoren beschrieben, die durch partielle Kondensation des Reaktionsproduktes einer Mischung von mindestens zwei alkoxilierten Verbindungen mit einem vinylischen Monomer hergestellt werden. Hierbei besteht mindestens eine der alkoxilierten Verbindungen aus einem Blockcopolymer, hergestellt durch Polyaddition eines Polyoxyalkylenglykols mit einem Diglycidylether. Die hier beschriebene Synthese ist aufwendig und die eingesetzten Diepoxide sind als Rohstoffe relativ kostenintensiv.

Die DE-A 36 35 489 beschreibt Copolymere aus hydrophoben Acrylsäure- oder Methacrylsäureestern und hydrophilen Monomeren. Die Herstellung der hydrophoben Ester erfolgt durch sauer katalysierte azeotrope Veresterung von Alkoxilaten ein- oder mehrwertiger Alkohole bzw. Alkylphenol/Aldehyd-Kondensationsprodukten mit (Meth)acrylsäure. Nach der Copolymerisation der hydrophoben Ester mit hydrophilen Monomeren werden die freien Hydroxyl-Gruppen in eine nicht mehr reaktive Form überführt und/oder die Katalysatorsäure mit einem tertiären Amin neutralisiert. Die Herstellung dieser Produkte ist zeitlich aufwendig, da die Veresterung des Alkoxilates mit (Meth)acrylsäure mehrere Stunden in Anspruch nimmt. Bei der Veresterung von Alkoxilaten mehrwertiger Alkohole ist es nicht möglich, selektiv den Monoester herzustellen, so daß es durch die vorhandenen mehrfunktionellen Acrylate bei der Copolymerisation mit hydrophilen Monomeren leicht zur Bildung unlöslicher Gele kommt.

In der DE-A 41 04 610 werden polymere Emulsionsspalter beschrieben, die erhalten werden durch Polymerisation vinylischer Monomerer in Gegenwart von Alkoxilaten auf Basis ein- oder mehrwertiger Alkohole und anschließender Kondensationsreaktion. Hierbei müssen die vinylischen Monomere geeignete reaktive Gruppen tragen, welche mit den OH-Funktionen der Alkoxilate in Reaktion treten können. In der Praxis hat sich gezeigt, daß sowohl die hohe Wirksamkeit als auch die Produzierbarkeit dieser Umsetzungsprodukte sehr empfindlich von geringen Qualitätsunterschieden des eingesetzten Alkoxilates abhängen. Reproduzierbare Produkteigenschaften sind daher nur unter großem technischem Aufwand zu erreichen.

Aufgabe der vorliegenden Erfindung war es, Demulgatoren zur Verfügung zu stellen, die eine möglichst schnelle Auftrennung von Emulsionen in Wasser und Öl sowie möglichst niedrige Restwassermengen liefern, lagerbeständig sind, einfach und vor allem ohne größere Qualitätsschwankungen reprodzierbar herstellbar sind.

Demgemäß wurden die eingangs definierten Reaktionsprodukte gefunden. Weiterhin wurde ein Verfahren zur Herstellung dieser Reaktionsprodukte gefunden sowie weiterhin Mischungen dieser Verbindungen und die Verwendung der Reaktionsprodukte und ihrer Mischungen als Demulgatoren für Rohölemulsionen.

Als vinylisch ungesättigte C₃-C₁₀-Carbonsauren oder deren Derivate I sind Acrylsäure, Methacrylsäure, Maleinsäure, Fumarsäure und Maleinsäureanhydrid zu nennen, von denen Acrylsäure bevorzugt wird.

Die Monomeren I können allein oder in Verfahrensschritt B) mit Comonomeren polymerisiert werden. Als Comonomere kommen aliphatische Ester der Carbonsäuren I wie Methyl(meth)acrylat, Ethyl(meth)acrylat, iso-Butylmethacrylat und Laurylacrylat ebenso in Betracht wie C₁-C₂₀-Hydroxyester der Carbonsäuren I wie Hydroxyethyl(meth)acrylat und Amide sowie C₂-C₄₀-Dialkylamide der Carbonsäuren I wie Acrylamid und solche Amide, die noch weitere funktionelle Gruppen tragen wie 2-Acrylamido-2-methylpropansulfonsäure. Weiterhin sind C₈-C₁₂-Arylvinylverbindungen wie Styrol, C₃-C₁₀-Alkene wie Isobuten, Trimethylpenten, ungesättigte C₃-C₈-Alkohole wie Allylalkohol, Vinylester von C₂-C₁₀-Carbonsäuren wie Vinylacetat und Vinylpropionet und C₃-C₂₀-Alkylvinylether wie Vinylmethylether als Comonomere zu nennen.

Weiterhin kommen heterocyclische Vinylverbindungen wie Vinylimidazol und Vinylpyrrolidon in Betracht.

Die erfindungsgemäß zu verwendenden Polyetherole II sind an sich bekannt oder nach bekannten Methoden herstellbar.

Die Darstellung der Polyetherole gelingt (s. z.B. DE-A 36 35 489, S. 5) durch Umsetzung eines multifunktionellen Alkohols mit einem Alkoxid oder einer Mischung aus mehreren Alkoxiden oder blockweise mit mehreren Alkoxiden unter Zuhilfenahme basischer Katalysatoren wie Natriumhydroxid bei Temperaturen von 80 bis 160°C. Das Verhältnis von Alkohol zu den Alkoxiden kann bei der Herstellung stark variieren, wird zweckmäßigerweise jedoch im Bereich von 1:120 bis 1:5 liegen. Bevorzugte Alkoxide sind Ethylenoxid, Propylenoxid und 1,2-Butylenoxid oder deren Mischungen. Als Alkohole sind C₂-C₃₀-Polyalkohole zu nennen: Ethylenglykol, Bisphenol A, Glycerin, Trimethylolpropan, Pentaerythrit, Sorbit und Polyglycerin.

Die unten beschriebenen Alkylphenol/Formaldehyd- bzw. Acetaldehyd-Kondensationsprodukte kommen ebenfalls in Betracht.

Alkoxilierte Alkylphenol/Formaldehyd- bzw. Acetaldehyd-Kondensationsprodukte

Die als Alkohole zur Alkoxilierung verwendeten Alkylphenyl/Formaldehyd- bzw. Acetaldehyd-Harze werden in an sich bekannter Weise durch Umsetzung des Aldehyds mit dem Alkylphenol im Verhältnis 2:1 bis 1:2 unter Basen- oder Säurekatalyse bei Temperaturen von 80 bis 250°C unter Zuhilfenahme eines hochsiedenden Lösungsmittels zur vollständigen azeotropen Entfernung des sich bildenden Reaktionswassers hergestellt. Als Alkylphenole werden z.B. Nonylphenol, t-Butylphenol oder Octylphenol verwendet. Als Katalysator wird im allgemeinen eine Alkylsulfonsäure oder Alkylbenzolsulfonsäure, z.B. Dodecylbenzolsulfonsäure verwendet.

Im allgemeinen enthalten die Moleküle 4 bis 12 aromatische Kerne, bevorzugt 5 bis 9.

Die so erhaltenen Kondensationsprodukte werden wie oben angegeben alkoxiliert.

### Verfahrensschritt A

Die Carbonsäuren oder Carbonsäurederivate I werden in Gegenwart eines molaren Überschusses an Polyetherol II kondensiert, d.h. die Säure- oder Anhydridgruppen werden verestert. Die Verbindungen II und I liegen im molaren Verhältnis von 2:1 bis 10:1 vor, wobei das Gewichtsverhältnis 25:1 bis 1000:1 beträgt. Die Reaktion kann in Gegenwart eines sauren Katalysators wie einer Milchsäure oder einer organischen Säure wie para-Toluolsulfonsäure erfolgen, wobei die Katalysatormenge im allgemeinen 0,5 bis 4 Gew.-%, bezogen auf die Menge an Polyetherol II, beträgt. In der Regel wird die Kondensation in einem inerten Lösungsmittel durchgeführt. Als Lösungsmittel kommen aromatische Kohlenwasserstoffe wie Toluol und Xylol sowie handelsübliche, hochsiedende Aromatengemische in Betracht, aber auch Dekalin. Die Menge des Lösungsmittels beträgt im allgemeinen 20 bis 80 Gew.-% bezogen auf den Gesamtansatz. Die Reaktion erfolgt bei Temperturen von 60 bis 100°C für 0,5 bis 1 Stunde. Auf eine Abtrennung des dabei gebildeten Wassers kann in der Regel verzichtet werden.

### Verfahrensschritt B

Das nach Verfahrensschritt A) erhaltene Reaktionsgemisch, das im wesentlichen das Kondensationsprodukt sowie nicht umgesetztes Polyetherol II enthält, wird zur Polymerisation gegebenenfalls mit weiteren olefinisch ungesättigten Monomeren versetzt, wobei das molare Verhältnis des Polyetherols II zur Summe der in den Verfahrensschritten A) und B) eingesetzten olefinisch ungesättigten Monomeren 1:5 bis 1:200, vorzugsweise 1:10 bis 1:50 beträgt. Der Anteil der Carbonsäuren I an der Menge der in diesem Verfahrensschritt umgesetzten olefinisch ungesättigten Monomere beträgt 50 bis 100 mol-%, vorzugsweise 75 bis 100 mol-%.

Die Polymerisation wird nach den bekannten diskontinuierlichen oder kontinuierlichen Verfahren der radikalischen Polymerisation wie Masse-, Suspension-, Fällungs- oder Lösungspolymerisation und Initiierung mit üblichen Radikalspendern wie Dicyclohexylperoxidicarbonat, tert.-Butylperoctoat, tert.-Butylperpivalat, 2,2'-Azobis(isobutyronitril), Dicumylperoxid, Di-tert.-amylperoxid, Di-tert.-butylperoxid, Cumolhydroperoxid oder tert.-Butylhydroperoxid und Mischungen untereinander durchgeführt. Im allgemeinen werden diese Initiatoren in Mengen von 0,1 bis 20 Gew.-%, vorzugsweise 0,2 bis 15 Gew.-%, berechnet auf die Monomeren, eingesetzt.

Die Polymerisation erfolgt in der Regel bei Temperaturen von 40 bis 200°C, vorzugsweise 60 bis 150°C, innerhalb von 0,5 bis 10 h, bevorzugt 1 bis 6 h, besonders bevorzugt 2 bis 4 h, wobei bei Verwendung von Lösungsmitteln mit Siedetemperturen unterhalb der Polymerisationstemperatur zweckmäßig unter Druck gearbeitet wird. Die Polymerisation wird zweckmäßig unter Luftausschluß, d.h. wenn nicht unter Siedebedingungen gearbeitet werden kann, z.B. unter Stickstoff oder Kohlendioxid durchgeführt, da Sauerstoff die Polymerisation verzögert. Durch Mitverwendung von Redox-Coinitiatoren wie Benzoin, Dimethylanilin, Ascorbinsäure sowie organisch löslichen Komplexen von Chrom kann die Reaktion beschleunigt werden. Die üblicherweise eingestzten Mengen liegen bei 0,1 bis 2000 Gew.-ppm, vorzugsweise 0,1 bis 1000 Gew.-ppm.

Zur Erzielung niedermolekularer Copolymere ist es oftmals zweckmäßig, in Gegenwart von Reglern zu arbeiten. Geeignete Regler sind beispielsweise Allylalkohole, wie Buten-1-ol-3, organische Mercaptoverbindungen wie 2-Mercaptoethanol, 2-Mercaptopropanol, Mercaptoessigsäure, Mercaptopropionsäure, tert.-Butylmercaptan, n-Butylmercaptan, n-Octylmercaptan, n-Dodecylmercaptan und ter.-Dodecylmercaptan, die im allgemeinen in Mengen von 0,1 bis 10 Gew.-% eingesetzt werden.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rohrreaktoren und statische Mischer.

Eine einfache Methode zur Herstellung der erfindungsgemäßen Polymerisate ist die Lösungspolymerisation. Sie wird in Lösungsmitteln durchgeführt, in denen die Monomeren und die gebildeten Copolymeren löslich sind. Es sind hierfür alle Lösungsmittel geeignet, die diese Vorgabe erfüllen und die mit den Monomeren keine Reaktion eingehen.

Beispielsweise sind dies aromatische und alkylsubstituierte aromatische Kohlenwasserstoffe wie Toluol, Xylol, Ethylbenzol, Cumol, hochsiedende Aromatengemische wie z.B. Solvesso® 100, 150 und 200, aliphatische und cycloaliphatische Kohlenwasserstoffe wie z.B. n-Hexan, Cyclohexan, Methylcyclohexan, n-Octan, iso-Octan, Dekalin, Paraffinöle, Shellsol® TD, T und K sowie Aceton, Cyclohexanon, Tetrahydrofuran und Dioxan, wobei zur Erzielung niedermolekularer Copolymerer Tetrahydrofuran und Dioxan besonders gut geeignet sind.

Da die Demulgatoren für Rohölemulsionen grenzflächenaktive Substanzen sind, die in der kontinuierlichen Phase (Ölphase) der Rohölemulsion löslich sein sollen, ist es zweckmäßig, ein Lösungsmittel zur Polymerisation zu wählen, welches mit der Emulsion verträglich ist, so daß die Demulgatorlösung der Emulsion direkt zugesetzt werden kann. Die Lösungspolymerisation ist die bevorzugte Herstellungsform für die erfindungsgemäßen Copolymerisate.

Bei der Durchführung der Lösungspolymerisation ist es zweckmäßig, das Reaktionsgemisch aus Verfahrensschritt (A) vorzulegen und die Monomeren mit dem Initiator und gegebenenfalls Coinitiator, Regler und Lösungsmittel zuzudosieren. Die Monomeren können auch einzeln und mit unterschiedlicher Geschwindigkeit zudosiert werden. Dies empfiehlt sich bei Monomeren mit stark unterschiedlicher Reaktivität und wenn eine besonders gleichmäßige Verteilung des weniger reaktiven Monomeren gewünscht wird. Dabei wird das weniger reaktive Monomer schneller und das reaktivere Monomer langsamer zudosiert. Es ist auch möglich, die gesamte Menge eines Monomeren, vorzugsweise des weniger reaktiven Monomeren, vorzulegen und nur das reaktivere zuzudosieren. Schließlich ist es auch möglich, alle Komponenten vorzulegen und nur den Initiator und gegebenenfalls Coinitiator und Regler zuzudosieren ("Batch"-Fahrweise). Bei der Durchführung dieser Fahrweise in größerem Maßstab können jedoch Probleme mit der Wärmeabführung auftreten, so daß diese Fahrweise nur bei geringen Konzentrationen der zu polymerisierenden Monomeren angewendet werden sollte.

### Verfahrensschritt C

Nach erfolgter Polymerisation wird das so erhaltene Reaktionsgemisch einer Kondensation unterworfen.

In diesem Verfahrensschritt wird ein Teil der freien Hydroxyl-gruppen des Polyetherols mit einem Teil der reaktiven Gruppen des Polymerisats aus den vinylischen Monomen (z.B. Acrylsäure oder deren Ester) umgesetzt. Dadurch kommt es zu Verbrückungen, wodurch sehr wirksame Demulgatoren gebildet werden. Die Zusammensetzung des Polyetherols, der vinylischen Monomeren und die Reaktionsbedingungen müssen dabei so gewählt werden, daß vollständig öllösliche Endprodukte erhalten werden. Im Kondensationsschritt dürfen deshalb auch nicht alle Hydroxylgruppen des Alkoxilats umgesetzt werden, wobei sich unlösliche Produkte bilden würden, vielmehr genügen meist geringe Umsätze, um den gewünschten Effekt zu erzielen. Die Hydroxylzahl der erfindungsgemäßen Reaktionsprodukte beträgt 2 bis 20. Es haben sich insbesondere solche Verfahrensprodukte im Hinblick auf ihre Verwendung als Demulgatoren bewährt, deren Säurezahl nach der Kondensation 70 bis 100 beträgt und deren K-Wert (nach H. Fikentscher, Cellulosechemie Band 13, Seiten 58 bis 64, und 71 bis 74 (1932), bestimmt in 2 %iger xylolischer Lösung) 10 bis 50, vorzugsweise 14 bis 30 beträgt.

Die bevorzugte Reaktion beim Kondensationsschritt ist die Veresterung.

Die Kondensation wird in der Regel bei Temperaturen zwischen 80 und 250°C, bevorzugt 100 bis 200°C und besonders bevorzugt zwischen 120 und 180°C innerhalb von 0,5 bis 10 Stunden, bevorzugt 1 bis 8 Stunden und besonders bevorzugt 2 bis 6 Stunden in der Schmelze oder in Lösung durchgeführt. Liegt die Siedetemperatur des Lösungsmittels unterhalb der gewünschten Kondensationstemperatur, wird die Kondensation unter Druck durchgeführt.

Zur Durchführung des Kondensationsschritts wird die Reaktionsmischung aus Verfahrensschritt B) auf die gewünschte Temperatur gebracht. In manchen Fällen ist es zweckmäßig, niedermolekulare Reaktionsprodukte (z.B. Wasser oder niedermolekulare Alkohole) aus dem Reaktionsgefäß zu entfernen. Dies kann z.B. dadurch erfolgen, daß man ein inertes Gas über die Polymerschmelze leitet oder durch Verwendung eines Schleppmittels. Soll z.B. Wasser aus der Reaktionsmischung entfernt werden, eignen sich als Schleppmittel die üblichen, mit Wasser ein Azeotrop bildenden organischen Lösungsmittel, insbesondere Xylol oder Toluol. Die Kondensation kann durch Zusatz von Katalysatoren, insbesondere saueren Katalysatoren wie Mineralsäuren, z.B. Schwefelsäure und Salzsäure, Sulfonsäuren wie p-Toluolsulfonsäure, Dodecylbenzolsulfonsäure oder sauren Ionenaustauschern beschleunigt werden. Wird Katalysatorsäure zugesetzt, kann diese nach Beendigung des Kondensationsschritts neutralisiert werden. Dazu eignen sich prinzipiell alle basischen Verbindungen. Vorzugsweise werden jedoch Amine wie Triethylamin, Ethylhexylamin, Tributylamin, Morpholin, Piperidin oder Ethanolamine verwendet. Dabei wird mindestens die zur Neutralisation der Katalysatorsäure nötige, stöchiometrische Menge Base zugesetzt. Es kann aber auch eine größere Basemange zugesetzt werden. In diesem Fall erfolgt auch die partielle oder vollständige Neutralisation der restlichen von den vinylischen Monomeren eingebrachten, sauren Gruppen, vor allem Carboxylgruppen, die aus der Carbonsäure I stammen. Durch die richtige Wahl der Base und des Neutralisationsgrads kann die Wirksamkeit der Demulgatoren den Rohölemulsionen angepaßt werden.

Die erfindungsgemäßen Reaktionsprodukte können auch in Abmischung mit anderen Demulgatoren, z.B. solchen auf Basis alkoxilierter Amine eingesetzt werden. Ebenfalls möglich ist der Einsatz der erfindungsgemäßen Polymerisate in Abmischung mit organischen Lösungsmitteln, z.B. Alkoholen wie z.B. n-Butanol, i-Propanol, n-Propanol, n-Butanol, s-Butanol, t-Butanol, Oktanole etc. Vorzugsweise beträgt der Gewichtsanteil der Alkohole 2 bis 10 Gew.-%, bezogen auf den Feststoffanteil der Mischungen.

Die erfindungsgemäßen Reaktionsprodukte zeigen als Demulgatoren in Rohölemulsionen eine hohe Spaltgeschwindigkeit und in ihrer Herstellung eine sehr gute Reproduzierbarkeit.

### Beispiele

### 1. Polyetherole

In den folgenden Beispielen bedeuten:
A1: Blockcopolymerisat aus 1 mol Propylenglykol, umgesetzt mit (im Mittel) 47,4 mol Propylenoxid, dann mit (im Mittel) 20,0 mol Ethylenoxid (= Beispiel a3 aus EP 264 841).
A2: Blockcopolymerisat aus 1 mol Trimethylolpropan, umgesetzt mit (im Mittel) 60,0 mol Propylenoxid, dann mit (im Mittel) 10,0 mol Ethylenoxid (= Beispiel a5 aus EP 264 841).
A3: Blockcopolymerisat aus 1 mol Trimethylolpropan, umgesetzt mit (im Mittel) 80,0 mol Propylenoxid, dann mit (im Mittel) 30,3 mol Ethylenoxid (= Beispiel a15 aus EP 264 841).

### 2. Herstellung der erfindungsgemäßen Reaktionsprodukte

### Allgemeine Herstellvorschrift

II wurde mit 5,5 g Toluolsulfonsäure versetzt und auf 100°C erhitzt. Nach Zugabe von a g Acrylsäure wurde die Reaktionsmischung 1 h bei dieser Temperatur gehalten. Bei 90°C wurden anschließend innerhalb von 2,5 h I und gleichzeitig b g t-Butylperoctanoat in c g Lösungsmittel zudosiert. Nach einer Stunde bei 100°C erhielt man milchig-trübe Polymerlösungen.

Diese Polymerlösungen wurden 3,5 h zum Sieden erhitzt, wobei Wasser azeotrop entfernt wurde. Nach Abkühlen auf Raumtemperatur wurden die Produkte mit d g n-Butanol und e g Lösungsmittel versetzt.

Die folgenden Tabellen 1 und 2 geben Mengen und Ausgangsstoffe, ihre molaren und gewichtsmäßigen Verhältnisse sowie charakterisierende Daten der Produkte an.

**Tabelle 1**

| Beispiel | II | a | I | b | c | d | e |
|---|---|---|---|---|---|---|---|
| B 1 | 700 g A1 | 2,8 | 250 g AS | 2,5 | 237 | 48 | 326 |
| | 479 g Xylol | | 240 g Xylol | | Xylol | | Xylol |
| B 2 | 700 g A1 | 5,5 | 238 g AS | 2,5 | 237 | 48 | 326 |
| | 479 g Xylol | | 240 g Xylol | | Xylol | | Xylol |
| B 3 | 700 g A1 | 1,4 | 242 g AS | 2,5 | 237 | 48 | 326 |
| | 479 g Xylol | | 240 g Xylol | | Xylol | | Xylol |
| B 4 | 304 g A1 | 1,2 | 110 g AS | 1,1 | 93 | 21 | 141 |
| | 208 g Dekalin | | 112 g Dekalin | | Dekalin | | Dekalin |
| B 5 | 700 g A1 | 2,8 | 225 g AS | 2,5 | 237 | 48 | 326 |
| | 479 g Xylol | | 25 g LA | | Xylol | | Xylol |
| | | | 240 g Xylol | | | | |
| AS = Acrylsäure | | | | | | | |
| LA = Laurylacrylat | | | | | | | |

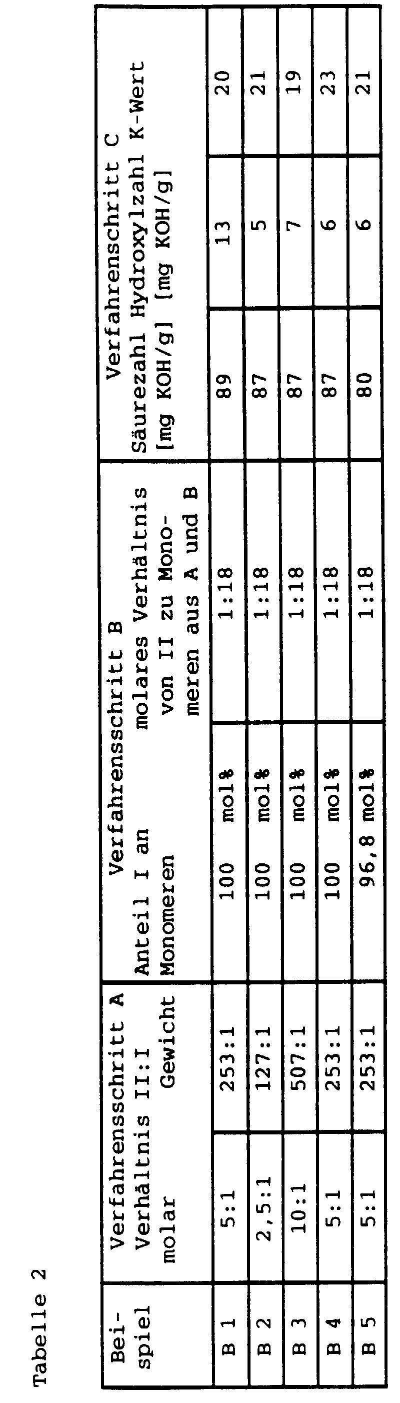

### 3. Vergleichsbeispiel 1 (V1) (= Beispiel B1 aus EP 264 841):

Eine Lösung von 244 g Polyetherol A2 in 110 g Xylol wurde mit 4,8 g Acrylsäure, 0,048 g Hydrochinonmonoethylether und 5 g p-Toluolsulfonsäure für 5 h auf 150°C erhitzt. Dabei wurden 1,1 ml Wasser ausgeschleppt. Der so erhaltene Acrylsäureester hatte eine Restsäurezahl von 4,1. Die so hergestellte Acrylsäureesterlösung wurde mit 182 g Xylol und 43 g Acrylsäure versetzt und unter Stickstoffatmosphäre auf 70°C erhitzt. Innerhalb von 2 h wurde anschließend eine Lösung von 2,5 g in 85 g Xylol zudosiert und danach noch 1 h bei dieser Temperatur nachpolymerisiert. Es wurde eine klare braune Lösung vom K-Wert 12,6 erhalten. Nun wurde 2 h unter Rückfluß Wasser azeotrop entfernt, auf Raumtemperatur abgekühlt und mit 15 g n-Butanol versetzt. (Produkt V1)

### Vergleichsbeispiel 2 (V2) (= Beispiel B14 aus DE 4104610):

Eine Lösung von 342 g A3 in 126 g Xylol wurde im schwachen Stickstoffstrom auf 70°C erhitzt und innerhalb von 2 h eine Lösung von 57,9 g Acrylsäure und 14,5 g Ethylacrylat und gleichzeitig eine Lösung von 1,45 g Azobisisobutyronitril in 50 g Xylol gleichmaßig zudosiert. Danach wurde noch eine Stunde bei 70°C nachgerührt. Man erhielt eine ölig, milchige Lösung. Diese Polymerlösung wurde mit 1,9 g p-Toluolsulfonsäure versetzt und 2 h zum Sieden unter Rückfluß (140°C) erhitzt. Danach wurde abgekühlt und mit 1,7 g Morpholin versetzt. (Produkt V2)

### 4. Test der Demulgatorwirksamkeit

Die Demulgator-Wirksamkeit der erfindungsgemäßen Polymerisate wurde anhand einer Rohölemulsion der Provinienz Rühlermoor/ Georgsdorf geprüft. Dazu wurde jeweils eine Wirkstoffkonzentration von 8 ppm des entsprechenden Emulsionsspalters, bezogen auf den Feststoffgehalt, unter Rühren der Emulsion zugegeben und die Wasserabscheidung in einem Meßzylinder zeitlich verfolgt. Die zur optimalen Emulsionsspaltung erforderliche Temperatur von 50°C wurde durch Einstellen der Meßzylinder in ein thermostatisiertes Wasserbad erreicht. Die in der Tabelle angegebenen Zahlenwerte entsprechen der prozentual abgespaltenen Wassermenge, bezogen auf den Gesamtwassergehalt der Emulsion (= 100 %).

**Tabelle 3:**

| Spalterwirksamkeit | | | | | | | |
|---|---|---|---|---|---|---|---|
| Produkt aus Beispiel | abgespaltene Wassermenge in % nach Minuten | | | | | | |
| | 10 | 20 | 30 | 45 | 60 | 120 | 240 |
| B1 | 4 | 8 | 34 | 80 | 96 | 100 | 100 |
| B2 | 0 | 2 | 16 | 49 | 71 | 78 | 80 |
| B3 | 2 | 9 | 27 | 67 | 73 | 78 | 80 |
| B4 | 2 | 7 | 27 | 82 | 98 | 98 | 100 |
| B5 | 2 | 7 | 20 | 68 | 91 | 96 | 99 |
| V1 | 0 | 0 | 2 | 2 | 4 | 53 | 62 |
| V2 | 0 | 0 | 0 | 0 | 2 | 7 | 20 |

Die Beispiele zeigen, daß die erfindungsgemäßen Demulgatoren in gleicher Zeit zu einer wesentlich besseren Wasserabspaltung führen als solche nach dem Stand der Technik.

## Patentansprüche

1. Als Demulgatoren für Rohölemulsionen geeignete Reaktionsprodukte mit einer Hydroxylzahl von 2 bis 20 aus olefinisch ungesättigten Carbonsäuren und Polyetherolen, erhältlich durch
A) Kondensation einer oder mehrerer ungesättigter C₃-C₁₀-Carbonsäuren oder deren Derivate der allgemeinen Formel I 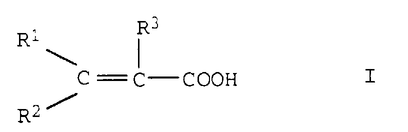 in der R¹ und R² für Wasserstoff, C₁-C₄-Alkyl oder Carboxyl und R³ für Wasserstoff oder Methyl stehen, und R¹ mit der Carboxylgruppe einen 5- oder 6-gliedrigen Anhydridring bilden kann,
mit einem Polyetherol II, welches erhältlich ist durch Umsetzung eines mehrwertigen Alkohols oder eines Alkylphenol/Formaldehyd- oder Alkylphenol/Acetaldehyd-Kondensationsproduktes mit 5 bis 120 mol eines oder mehrerer verzweigter oder geradkettiger C₂- bis C₄-Alkylenoxide pro Mol des mehrwertigen Alkoholes oder des Alkylphenol/ Formaldehyd- oder -Acetaldehyd-Kondensationsproduktes, wobei mehrere Alkylenoxide in einer Mischung oder blockweise angelagert werden können,
im molaren Verhältnis der Verbindungen II zu I von 2:1 bis 10:1 und im Gewichtsverhältnis von 25:1 bis 1000:1 bei Temperaturen von 60 bis 100°C für 0,5 bis 1 Stunde,
B) Polymerisation des so erhaltenen Reaktionsgemisches, das das Kondensationsprodukt sowie nicht umgesetztes Polyetherol II enthält, gegebenenfalls mit weiteren olefinisch ungesättigten, mit den Carbonsäuren I copolymerisierbaren Monomeren, wobei der Anteil der Carbonsäuren I an der Menge der olefinisch ungesättigten Monomeren 50 bis 100 mol-% beträgt, und wobei das molare Verhältnis des Polyetherols II zur Summe der in den Verfahrensschritten A) und B) eingesetzten olefinisch ungesättigten Monomeren 1:5 bis 1:200 beträgt, sowie anschließende
C) Kondensation des so erhaltenen Reaktionsgemisches mit der Maßgabe, daß nicht alle Hydroxylgruppen umgesetzt werden.

2. Reaktionsprodukte nach Anspruch 1, dadurch gekennzeichnet, daß die olefinisch ungesättigte Carbonsäure I zu 50 bis 100 mol-% aus Acrylsäure besteht.

3. Reaktionsprodukte nach Anspruch 1 oder 2, dadurch gekennzeichnet, daß es auf einem Polyetherol II basiert, welches durch Umsetzung mit Ethylenoxid, Propylenoxid oder einer Mischung hieraus erhalten wurde.

4. Mischungen, enthaltend 30 bis 60 Gew.-% Reaktionsprodukte gemäß den Ansprüchen 1 bis 3, ein organisches Lösungsmittel sowie gegebenenfalls weitere Demulgatoren.

5. Verfahren zur Herstellung der Reaktionsprodukte nach mit einer Hydroxylzahl von 2 bis 20 nach Anspruch 1, dadurch gekennzeichnet, daß man
A) eine oder mehrere ungesättigte C₃-C₁₀-carbonsäuren oder deren Derivate der allgemeinen Formel I 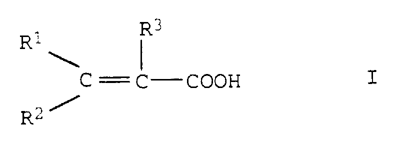 in der R¹ und R² für Wasserstoff, C₁-C₄-Alkyl oder Carboxyl und R³ für Wasserstoff oder Methyl stehen, und R¹ mit der Carboxylgruppe einen 5- oder 6-gliedrigen Anhydridring bilden kann,
mit einem Polyetherol II, welches erhältlich ist durch Umsetzung eines mehrwertigen Alkohols oder eines Alkylphenol/Formaldehyd- oder Alkylphenol/Acetaldehyd-Kondensationsproduktes mit 5 bis 120 mol eines oder mehrerer verzweigter oder geradkettiger C₂- bis C₄-Alkylenoxide pro Mol des mehrwertigen Alkoholes oder des Alkylphenol/ Formaldehyd- oder -Acetaldehyd-Kondensationsproduktes, wobei mehrere Alkylenoxide in einer Mischung oder blockweise angelagert werden können,
im molaren Verhältnis der Verbindungen II zu I von 2:1 bis 10:1 und im Gewichtsverhältnis von 25:1 bis 1000:1 bei Temperaturen von 60 bis 100°C für 0,5 bis 1 Stunde kondensiert,
B) das so erhaltene Reaktionsgemisch, das das Kondensationsprodukt sowie nicht umgesetztes Polyetherol II enthält, gegebenenfalls mit weiteren olefinisch ungesättigten, mit den Carbonsäuren I copolymerisierbaren Monomeren polymerisiert, wobei der Anteil der Carbonsäuren I an der Menge der olefinisch ungesättigten Monomeren 50 bis 100 mol-% beträgt, sowie anschließend das molare Verhältnis des Polyetherols II zur Summe der in den Verfahrensschritten A) und B) eingesetzten olefinisch ungesättigten Monomeren 1:5 bis 1:200 beträgt, sowie anschließend
C) das so erhaltene Reaktionsgemisch mit der Maßgabe kondensiert, daß nicht alle Hydroxylgruppen umgesetzt werden.

6. Verwendung der Reaktionsprodukte gemäß den Ansprüchen 1 bis 3 als Demulgatoren für Rohölemulsionen.

7. Verwendung der Mischungen gemäß Anspruch 4 als Demulgatoren für Rohölemulsionen.

## Claims

1. A reaction product which is suitable as a demulsifier for crude oil emulsions, has a hydroxyl number of from 2 to 20, comprises olefinically unsaturated carboxylic acids and polyetherols and is obtainable by
A) condensation of one or more unsaturated C₃-C₁₀-carboxylic acids or their derivatives of the formula I 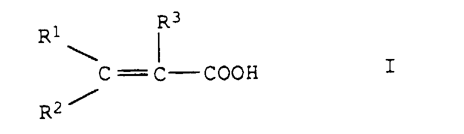 where R¹ and R² are each hydrogen, C₁-C₄-alkyl or carboxyl, R³ is hydrogen or methyl and R¹ together with the carboxyl group may form a 5-membered or 6-membered anhydride ring,
with a polyetherol II which is obtainable by reacting a polyhydric alcohol or an alkylphenol/formaldehyde or alkylphenol/acetaldehyde condensate with from 5 to 120 mol of one or more branched or straight-chain C₂- to C₄-alkylene oxides per mole of the polyhydric alcohol or of the alkylphenol/formaldehyde or alkylphenol/acetaldehyde condensate, it being possible to subject a plurality of alkylene oxides in a mixture or blockwise to an addition reaction,
in a molar ratio of compounds II to I of from 2 : 1 to 10 : 1 and in a weight ratio of from 25 : 1 to 1,000 : 1 at from 60 to 100°C for from 0.5 to 1 hour,
B) polymerization of the resulting reaction mixture which contains the condensate and unreacted polyetherol II with, if required, further olefinically unsaturated monomers copolymerizable with the carboxylic acids I, the amount of the carboxylic acids I being from 50 to 100 mol %, based on the amount of the olefinically unsaturated monomers, and the molar ratio of the polyetherol II to the sum of the olefinically unsaturated monomers used in process steps A) and B) being from 1 : 5 to 1 : 200, and subsequent
C) condensation of the resulting reaction mixture, with the proviso that not all hydroxyl groups are converted.

2. A reaction product as claimed in claim 1, wherein the olefinically unsaturated carboxylic acid I consists of from 50 to 100 mol % of acrylic acid.

3. A reaction product as claimed in claim 1 or 2, which is based on a polyetherol II obtained by reaction with ethylene oxide, propylene oxide or a mixture thereof.

4. A mixture containing from 30 to 60% by weight of a reaction product as claimed in any of claims 1 to 3, an organic solvent and, if required, further demulsifiers.

5. A process for the preparation of a reaction product having a hydroxyl number of from 2 to 20 as claimed in claim 1, wherein
A) one or more unsaturated C₃-C₁₀-carboxylic acids or their derivatives of the formula I 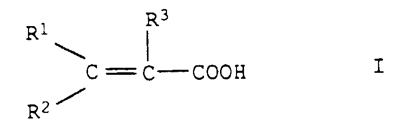 where R¹ and R² are each hydrogen, C₁-C₄-alkyl or carboxyl, R³ is hydrogen or methyl and R¹ together with the carboxyl group may form a 5-membered or 6-membered anhydride ring,
are condensed with a polyetherol II which is obtainable by reacting a polyhydric alcohol or an alkylphenol/formaldehyde or alkylphenol/acetaldehyde condensate with from 5 to 120 mol of one or more branched or straight-chain C₂ to C₄-alkylene oxides per mole of the polyhydric alcohol or of the alkylphenol/formaldehyde or alkylphenol/acetaldehyde condensate, it being possible to subject a plurality of alkylene oxides in a mixture or blockwise to an addition reaction,
in a molar ratio of the compounds II to I of from 2 : 1 to 10 : 1 and in a weight ratio of from 25 : 1 to 1,000 : 1 at from 60 to 100°C for from 0.5 to 1 hour,
B) the resulting reaction mixture which contains the condensate and unreacted polyetherol II is polymerized, if required, with further olefinically unsaturated monomers copolymerizable with the carboxylic acids I, the amount of the carboxylic acids I being from 50 to 100 mol %, based on the amount of the olefinically unsaturated monomers, and the molar ratio of the polyetherol II to the sum of the olefinically unsaturated monomers used in process steps A) and B) then being from 1 : 5 to 1 : 200, and then
C) the reaction mixture thus obtained is condensed, with the proviso that not all hydroxyl groups are converted.

6. Use of a reaction product as claimed in any of claims 1 to 3 as a demulsifier for crude oil emulsions.

7. Use of a mixture as claimed in claim 4 as a demulsifier for crude oil emulsions.

## Revendications

1. Produits de réaction appropriés comme désémulsifiants pour des émulsions de pétrole brut, possédant un indice d'hydroxyle de 2 à 20, constitués par des acides carboxyliques oléfiniquement insaturés et par des polyétherols, que l'on obtient par
A) condensation d'un ou de plusieurs acides carboxyliques insaturés en C₃-C₁₀ ou d'un ou de plusieurs de leurs dérivés répondant à la formule générale I 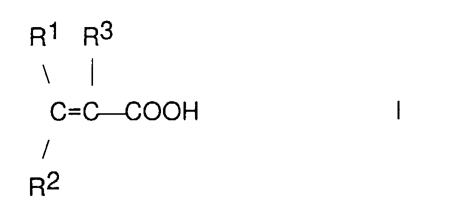 dans laquelle R¹ et R² représentent un atome d'hydrogène, un groupe alkyle en C₁-C₄ ou un groupe carboxyle, et R³ représente un atome d'hydrogène ou un groupe méthyle, R¹ pouvant former avec le groupe carboxyle un noyau anhydride à 5 ou 6 membres,
avec un polyétherol II, que l'on obtient par mise en réaction d'un alcool polyvalent ou d'un produit de condensation d'alkylphénol/formaldéhyde ou d'alkylphénol/acétaldéhyde avec un ou plusieurs oxydes d'alkylènes en C₂-C₄ ramifiés ou à chaînes droites à concurrence de 5 à 120 moles par mole de l'alcool polyvalent ou du produit de condensation d'alkylphénol/formaldéhyde ou d'alkylphénol/acétaldéhyde, plusieurs oxydes d'alkylènes pouvant être fixés par addition en mélange ou de manière séquentielle,
dans un rapport molaire des composés II à I de 2:1 à 10:1 et dans un rapport pondéral de 25:1 à 1.000:1, à des températures de 60 à 100°C, pendant un laps de temps de 0,5 à 1 heure,
B) polymérisation du mélange réactionnel ainsi obtenu, qui contient le produit de condensation, ainsi que du polyéther-polyol Il n'ayant pas réagi, le cas échéant avec d'autres monomères oléfiniquement insaturés copolymérisables avec les acides carboxyliques I, la quantité des monomères oléfiniquement insaturés représentant une fraction des acides carboxyliques I s'élevant de 50 à 100 moles %, et dans laquelle le rapport molaire du polyéther-polyol II à la somme des monomères oléfiniquement insaturés mis en oeuvre dans les étapes opératoires A) et B) s'élève de 1:5 à 1:200, ainsi que par
C) condensation ultérieure du mélange réactionnel ainsi obtenu, avec cette mesure que l'on ne fait pas réagir tous les groupes hydroxyle.

2. Produits de réaction selon la revendication 1, caractérisés en ce que l'acide carboxylique I oléfiniquement insaturé est constitué par de l'acide acrylique jusqu'à concurrence de 50 à 100 moles %.

3. Produits de réaction selon la revendication 1 ou 2, caractérisés en ce qu'ils sont à base d'un polyétherol II que l'on obtient par mise en réaction d'oxyde d'éthylène, d'oxyde de propylène ou d'un mélange de ces derniers.

4. Mélanges contenant des produits de réaction selon les revendications 1 à 3 à concurrence de 30 à 60% en poids, un solvant organique, ainsi que, le cas échéant, d'autres désémulsifiants.

5. Procédé pour la préparation des produits de réaction possédant un indice d'hydroxyle de 2 à 20 selon la revendication 1, caractérisé en ce que
A) on condense un ou plusieurs acides carboxyliques insaturés en C₃-C₁₀ ou un ou plusieurs de leurs dérivés répondant à la formule générale I 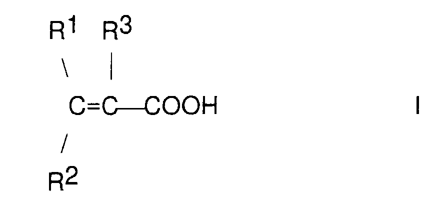 dans laquelle R¹ et R² représentent un atome d'hydrogène, un groupe alkyle en C₁-C₄ ou un groupe carboxyle, et R³ représente un atome d'hydrogène ou un groupe méthyle, R¹ pouvant former avec le groupe carboxyle un noyau anhydride à 5 ou 6 membres,
avec un polyétherol II, que l'on obtient par mise en réaction d'un alcool polyvalent ou d'un produit de condensation d'alkylphénol/formaldéhyde ou d'alkylphénol/acétaldéhyde avec un ou plusieurs oxydes d'alkylènes en C₂-C₄ ramifiés ou à chaînes droites à concurrence de 5 à 120 moles par mole de l'alcool polyvalent ou du produit de condensation d'alkylphénol/formaldéhyde ou d'alkylphénol/acétaldéhyde, plusieurs oxydes d'alkylènes pouvant être fixés par addition en mélange ou de manière séquentielle,
dans un rapport molaire des composés II à I de 2:1 à 10:1 et dans un rapport pondéral de 25:1 à 1.000:1, à des températures de 60 à 100°C, pendant un laps de temps de 0,5 à 1 heure,
B) on polymérise le mélange réactionnel ainsi obtenu, qui contient le produit de condensation, ainsi que du polyétherol II n'ayant pas réagi, le cas échéant avec d'autres monomères oléfiniquement insaturés copolymérisables avec les acides carboxyliques I, la quantité des monomères oléfiniquement insaturés représentant une fraction des acides carboxyliques I s'élevant de 50 à 100 moles %, et le rapport molaire du polyétherol II à la somme des monomères oléfiniquement insaturés mis en oeuvre dans les étapes opératoires A) et B) s'élèvant de 1:5 à 1:200, et
C) on condense ultérieurement le mélange réactionnel ainsi obtenu, avec cette mesure que l'on ne fait pas réagir tous les groupes hydroxyle.

6. Utilisation des produits de réaction selon les revendications 1 à 3 à titre de désémulsifiants pour des émulsions de pétrole brut.

7. Utilisation des mélanges selon la revendication 4 à titre de désémulsifiants pour des émulsions de pétrole brut.
